# EUROPEAN PATENT APPLICATION

(11) **EP 4 180 488 A1**
(43) Date of publication of application: **17.05.2023**
(21) Application number: 21836856.1
(22) Date of filing: 01.07.2021
(51) Int. Cl.: C08L 83/06, C08K 5/5425, C09D 183/06, C09J 183/06, C09K 3/10

(54) **TWO-COMPONENT TYPE ROOM TEMPERATURE FAST-CURING ORGANOPOLYSILOXANE COMPOSITION, CURED PRODUCT THEREOF AND ARTICLE**

(30) Priority: 07.07.2020 JP 2020116786
(71) Applicant: SHIN-ETSU CHEMICAL CO., LTD., Tokyo 1000005 (JP)
(72) Inventor: YAMAGUCHI Takahiro, Annaka-shi, Gunma 379-0224 (JP); FUJIWARA Akitsugu, Annaka-shi, Gunma 379-0224 (JP); SATOU Tokuo, Annaka-shi, Gunma 379-0224 (JP)
(74) Representative: Mewburn Ellis LLP
(86) International application number: PCT/JP2021/024888
(87) International publication number: WO 2022/009759

(57) **Abstract**

A two-component type room temperature fast-curing organopolysiloxane composition which is a room temperature curing organopolysiloxane composition of a two-component and dealcohol type and which comprises, as curing agents, a first agent containing a hydrolyzable organosilane compound represented by formula (3) and/or a partially hydrolyzed condensation product thereof and a second agent containing a curing catalyst. This composition has particularly excellent fast-curing properties and deep-curing properties and provides a cured product having both high storage stability and high durability. 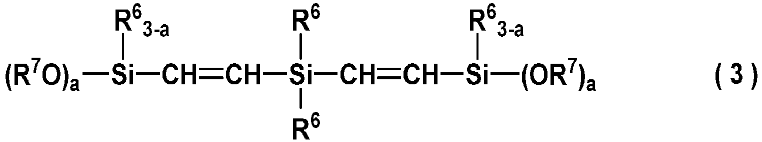 (R⁶ represents an unsubstituted or substituted monovalent hydrocarbon group having 1-20 carbon atoms; R⁷ represents an unsubstituted or substituted alkyl group having 1-20 carbon atoms or an unsubstituted or substituted cycloalkyl group having 3-20 carbon atoms; and a is from 1 to 3.)

## Description

### TECHNICAL FIELD

This invention relates to a two-pack type room temperature (RT) fast-curable organopolysiloxane composition, and more particularly, to a two-pack type RT fast-curable organopolysiloxane composition comprising a hydrolyzable organosilane compound of bis-silyl type having per molecule two hydrolyzable silyl groups and two groups of the structure that a carbon-carbon double bond is linked to one silicon atom in each of the two hydrolyzable silyl groups, that is, two alkoxysilyl-vinylene groups (or alkoxysilyl-ethenylene groups) on a common silicon atom in the molecule, and/or a partial hydrolytic condensate (hydrolyzable organosiloxane oligomer) thereof as a curing or crosslinking agent; a variety of agents comprising the composition; and a molded article of an elastomer (silicone rubber cured product) obtained by curing the two-pack type RT fast-curable organopolysiloxane composition.

### BACKGROUND ART

In the prior art, there are known a variety of room temperature (RT) curable organopolysiloxane compositions which when brought in contact with airborne moisture or humidity at RT (23°C±15°C), crosslink through hydrolytic condensation reaction and cure into elastomer cured products (silicone rubber cured products). Of these, organopolysiloxane compositions of the dealcoholization type which crosslink through condensation reaction and cure while releasing alcohol are preferably used in sealing of electric/electronic parts or the like, bonding, and coating because they give off no disgusting odors and are non-corrosive to metals.

Typical of these compositions are a composition comprising a silanol group-end-capped linear organopolysiloxane, an alkoxysilane, and an organic titanium compound, a composition comprising an alkoxysilyl group-end-capped linear organopolysiloxane, an alkoxysilane, and an alkoxytitanium compound, a composition comprising a linear organopolysiloxane end-capped with a silethylene-containing alkoxysilyl group, an alkoxysilane, and an alkoxytitanium compound, and a composition comprising a silanol group-end-capped linear organopolysiloxane or alkoxy group-end-capped linear organopolysiloxane and an alkoxy-α-silyl ester compound. See Patent Document 1: JP-B S39-27643, Patent Document 2: JP-A S55-43119, Patent Document 3: JP-B H07-39547, and Patent Document 4: JP-A H07-331076.

These compositions have certain shelf stability, water resistance and moisture resistance, but are still short to fully meet such physical properties. They are also still insufficient in fast cure.

As mentioned above, a linear organosiloxane polymer terminated with a hydrolyzable or reactive alkoxysilyl group is well known in the art. A composition based on this linear organosiloxane polymer whose end group is previously capped with an alkoxysilyl group is unsusceptible to a decline of cure with a lapse of time and has excellent shelf stability. Its workability (viscosity, thixotropy and the like) can be adjusted as desired. The polymer crosslinks through reaction with airborne moisture to form an elastomer (cured product of the organopolysiloxane composition). This elastomer has excellent properties such as hardness, tensile strength and elongation at break.

However, the RT-curable organopolysiloxane composition of dealcoholization type is low in reactivity with airborne moisture and thus insufficient in curability, as compared with prior art well-known RT-curable organopolysiloxane compositions of another cure type such as deoximation, de-acetic acid, or deacetonation type.

On the other hand, of the RT-curable organopolysiloxane compositions of dealcoholization type, RT-curable organopolysiloxane compositions of two-pack dealcoholization type is good in curability, but slow in deep cure and fails to cure fully in a brief time, as compared with RT-curable organopolysiloxane compositions of one-pack dealcoholization type.

### PRIOR ART DOCUMENTS

### PATENT DOCUMENTS

Patent Document 1: JP-B S39-27643
Patent Document 2: JP-A S55-43119
Patent Document 3: JP-B H07-39547
Patent Document 4: JP-A H07-331076
Patent Document 5: JP 5960843
Patent Document 6: JP 5997778
Patent Document 7: WO 2015/194340

### SUMMARY OF INVENTION

### TECHNICAL PROBLEM

Aiming to develop a RT-curable organopolysiloxane composition which is fully fast curable and gives a cured product having good moisture resistance (curability after storage under moist conditions), the inventors proposed a linear organopolysiloxane polymer having an alkoxysilyl-vinylene or alkoxysilyl-ethenylene group at an end of the molecular chain and a RT-curable organopolysiloxane composition based on the polymer (Patent Document 5: JP 5960843 and Patent Document 6: JP 5997778). These compositions have fully acceptable properties. The compositions, however, cannot be prepared in an industrially advantageous manner because it is necessary to newly synthesize a polymer having a specific molecular weight and substituent structure. Then the inventors proposed a silicon compound having the end structure of alkoxysilyl-vinylene or alkoxysilyl-ethenylene group and an organopolysiloxane composition of one pack type based on the silicon compound (Patent Document 7: WO 2015/194340). Since it is expected that a further improvement in fast cure leads to an improvement in production efficiency, a RT-curable organopolysiloxane composition of two-pack type which is improved in fast cure despite the two-pack type is desired.

An object of the invention, which has been made under the above-mentioned circumstances, is to provide a RT-curable organopolysiloxane composition of dealcoholization type, specifically a RT fast-curable organopolysiloxane composition of two pack type which is improved in fast cure and deep cure, a variety of agents comprising the composition, and a molded article of an elastomer (silicone rubber cured product) obtained by curing the RT fast-curable organopolysiloxane composition.

### SOLUTION TO PROBLEM

In connection with the outstanding problem that the prior art RT-curable organopolysiloxane compositions of dealcoholization type are insufficient in cure, the inventors have found that a compound structured such that the group for linking an alkoxysilyl group is a vinylene or ethenylene group allows the alkoxy moiety of the alkoxysilyl group to exhibit significantly improved hydrolysis. Based on this finding, the inventors have further found that when an organosilane compound having two hydrolyzable silyl groups per molecule, represented by the formula (3) shown below, specifically a hydrolyzable organosilane compound of bis-silyl type having two hydrolyzable silyl groups and two groups structured such that a carbon-carbon double bond is linked to the silicon atom in each of the two hydrolyzable silyl groups, that is, two alkoxysilyl-vinylene groups (or alkoxysilyl-ethenylene groups) on a common silicon atom in one molecule, is used as a crosslinking or curing agent, there is obtained a RT fast-curable organopolysiloxane composition of dealcoholization type which has improved fast cure and shelf stability and affords a cured product having improved durability.

The inventors made further investigations on the problem that the two-pack RT-curable organopolysiloxane composition of dealcolization type is good in curability, but is slow in deep cure and fails to fully cure within a short time, as compared with the prior art one-pack RT-curable organopolysiloxane composition of dealcolization type. As a result, the inventors have found that by separately formulating a first pack comprising a reactive hydrolyzable organosilane compound having the formula (3) shown later and/or a partial hydrolytic condensate thereof and a second pack comprising a curing catalyst so as to design a two-pack type composition, and mixing the first pack comprising a hydrolyzable organosilane compound having formula (3) and/or a partial hydrolytic condensate thereof and the second pack comprising a curing catalyst, there is obtained a RT fast-curable organopolysiloxane composition of two pack type which has further improved fast cure and deep cure. The invention is predicated on this finding.

Accordingly, the invention provides a two-pack type RT fast-curable organopolysiloxane composition, a sealing agent, coating agent or adhesive agent comprising the composition; and a molded article comprising an elastomer (silicone rubber cured product) obtained from curing of the composition.
[1] A two-pack type room temperature fast-curable organopolysiloxane composition consisting of:
   a first pack comprising
      (A) 100 parts by weight of an organopolysiloxane having the general formula (1) or (2): 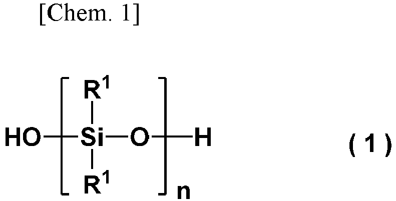 wherein R¹ is independently a C₁-C₂₀ unsubstituted or substituted monovalent hydrocarbon group and n is an integer of at least 10, 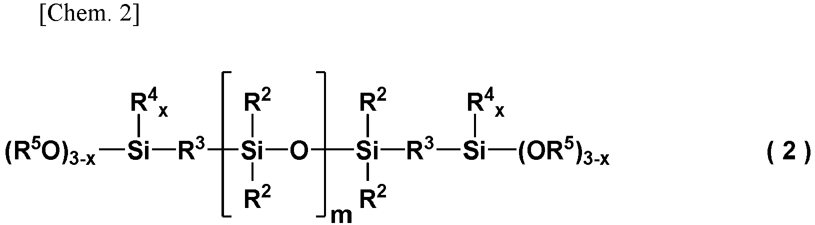 wherein R² is independently a C₁-C₂₀ unsubstituted or substituted monovalent hydrocarbon group, R³ is oxygen or a C₁-C₄ alkylene group, R⁴ is independently a C₁-C₂₀ unsubstituted or substituted monovalent hydrocarbon group free of aliphatic unsaturation, R⁵ is independently a C₁-C₄ alkyl, alkoxyalkyl, alkenyl or acyl group, x is an integer of 0 to 2, and m is an integer of at least 10, and
      (B) a hydrolyzable organosilane compound having the general formula (3): 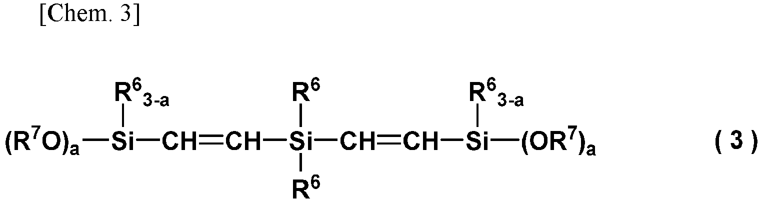 wherein R⁶ is independently a C₁-C₂₀ unsubstituted or substituted monovalent hydrocarbon group, R⁷ is independently a C₁-C₂₀ unsubstituted or substituted alkyl group or C₃-C₂₀ unsubstituted or substituted cycloalkyl group, and a is an integer of 1 to 3 independently for each silicon atom, and/or a partial hydrolytic condensate thereof, in an amount of 0.1 to 30 parts by weight per 100 parts by weight of total component (A) in the first and second packs, and
   a second pack comprising
      (A) 10 to 100 parts by weight of an organopolysiloxane having the general formula (1) or (2): 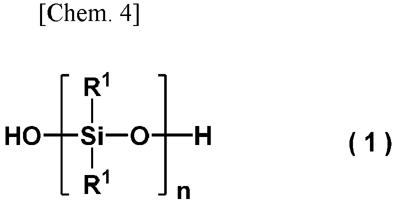 wherein R¹ is independently a C₁-C₂₀ unsubstituted or substituted monovalent hydrocarbon group and n is an integer of at least 10, 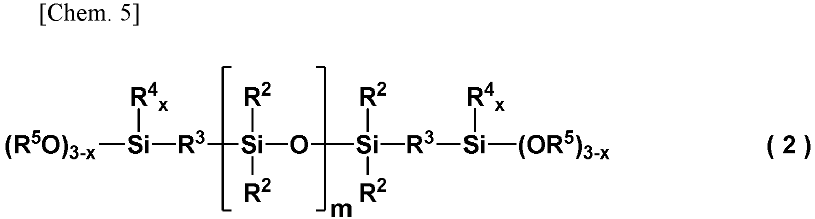 wherein R² is independently a C₁-C₂₀ unsubstituted or substituted monovalent hydrocarbon group, R³ is oxygen or a C₁-C₄ alkylene group, R⁴ is independently a C₁-C₂₀ unsubstituted or substituted monovalent hydrocarbon group free of aliphatic unsaturation, R⁵ is independently a C₁-C₄ alkyl, alkoxyalkyl, alkenyl or acyl group, x is an integer of 0 to 2, and m is an integer of at least 10, and
      (C) a curing catalyst in an amount of 0.001 to 10 parts by weight per 100 parts by weight of total component (A) in the first and second packs.
[2] The two-pack type room temperature fast-curable organopolysiloxane composition of [1], further comprising (D) a filler in each of the first and second packs in an amount of 0 to 1,000 parts by weight per 100 parts by weight of total component (A) in the first and second packs, with the proviso that at least one of the first and second packs contains at least 0.1 part by weight of the filler.
[3] The two-pack type room temperature fast-curable organopolysiloxane composition of [1] or [2], further comprising (E) an adhesion promoter in each of the first and second packs in an amount of 0 to 30 parts by weight per 100 parts by weight of total component (A) in the first and second packs, with the proviso that at least one of the first and second packs contains at least 0.001 part by weight of the adhesion promoter.
[4] The two-pack type room temperature fast-curable organopolysiloxane composition of any one of [1] to [3], further comprising (F) an organopolysiloxane having the general formula (4) in each of the first and second packs in an amount of 0 to 100 parts by weight per 100 parts by weight of total component (A) in the first and second packs, with the proviso that at least one of the first and second packs contains at least 0.01 part by weight of the organopolysiloxane having formula (4), 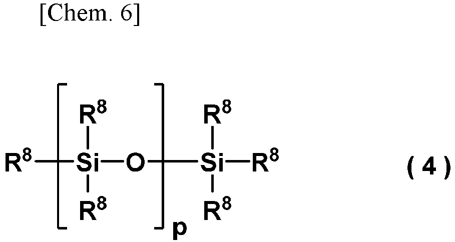 wherein R⁸ is independently a C₁-C₂₀ unsubstituted or substituted monovalent hydrocarbon group free of aliphatic unsaturation and p is an integer of 1 to 2,000.
[5] The two-pack type room temperature fast-curable organopolysiloxane composition of any one of [1] to [4] wherein the first and second packs are in a weight ratio of from 1:1 to 10:1.
[6] A sealing agent comprising the two-pack type room temperature fast-curable organopolysiloxane composition of any one of [1] to [5].
[7] A coating agent comprising the two-pack type room temperature fast-curable organopolysiloxane composition of any one of [1] to [5].
[8] An adhesive agent comprising the two-pack type room temperature fast-curable organopolysiloxane composition of any one of [1] to [5].
[9] A cured product of the two-pack type room temperature fast-curable organopolysiloxane composition of any one of [1] to [5].
[10] A molded article comprising the cured product of the two-pack type room temperature fast-curable organopolysiloxane composition of [9].

### ADVANTAGEOUS EFFECTS OF INVENTION

The two-pack type RT fast-curable organopolysiloxane composition of the invention is of two pack type consisting of a first pack and a second pack. The composition obtained by mixing the first pack with the second pack is improved in fast cure and deep cure.

The two-pack type RT fast-curable organopolysiloxane composition is fully fast curable and effectively workable at RT in air. Further the composition has shelf stability. Therefore, even after storage for a long period of time, for example, 6 months, the two-pack type RT fast-curable organopolysiloxane composition quickly cures into a product having improved physical properties when the first pack and the second pack are mixed and exposed to air. Therefore, the two-pack type RT fast-curable organopolysiloxane composition is useful as a sealing, coating or adhesive agent to be applied to a place where heat resistance, water resistance and moisture resistance are necessary. The composition is especially useful in the building application and the adhesive agent application for electric/electronic parts requiring moisture resistance and water resistance.

Further, when a hydrolyzable organosilane compound having two alkoxysilyl-vinylene groups, represented by the general formula (3) and/or a partial hydrolytic condensate thereof, differently stated, a hydrolyzable organosilane compound in which two silicon atoms, each one being included in each of two hydrolyzable silyl groups in the molecule, are linked to a common silicon atom each via an ethenylene group (carbon-carbon double bond), that is, the linkage: [(hydrolyzable silyl group)-(ethenylene group)-(silicon atom)-(ethenylene group)-(hydrolyzable silyl group)], specifically an organosilane of bis(hydrolyzable silyl) type, and/or a partial hydrolytic condensate (or hydrolyzable siloxane oligomer) thereof, is used as a curing agent or component (B), the inventive composition is further improved in fast cure and deep cure, has shelf stability and affords a cured product having satisfactory durability.

Now that general-purpose reactants, chlorosilane and hydrosilanes (e.g., diorganodichlorosilanes and monohydroalkoxysilanes) may be used as the starting reactants for component (B), the two-pack type RT fast-curable organopolysiloxane composition can be prepared in an industrially advantageous manner. Furthermore, the RT fast-curable organopolysiloxane composition having improved fast cure and deep cure can be prepared by mixing the first pack with the second pack as mentioned above.

### DESCRIPTION OF EMBODIMENTS

Now the invention is described in further detail.

### <Two-pack type RT fast-curable organopolysiloxane composition>

The invention provides a two-pack type RT fast-curable organopolysiloxane composition comprising a first pack containing specific amounts of components (A) and (B) and a second pack containing specific amounts of components (A) and (C). It is noted that the first pack does not contain component (C) whereas the second pack does not contain component (B).

Each component is described below in detail.

### - Component (A): Organopolysiloxane -

Component (A) is an organopolysiloxane having the general formula (1) or (2) and serves as a main component or base polymer in the two-pack type RT fast-curable organopolysiloxane composition.

The organopolysiloxane having formula (1) is a linear diorganopolysiloxane whose backbone has the structure of repeating diorganosiloxane units ((R¹)₂SiO_{2/2}) and which is capped at both ends of the molecular chain with a silicon-bonded hydroxy group (silanol group) or diorganohydroxysiloxy group.

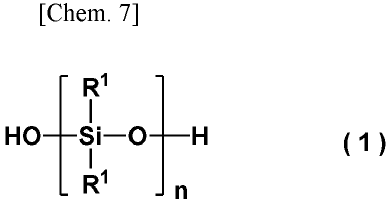

In formula (1), R¹ is independently a C₁-C₂₀ unsubstituted or substituted monovalent hydrocarbon group and n is an integer of at least 10.

In formula (1), the unsubstituted or substituted monovalent hydrocarbon group R¹ is of 1 to 20 carbon atoms, preferably 1 to 10 carbon atoms, more preferably 1 to 8 carbon atoms. Examples of the unsubstituted monovalent hydrocarbon group R¹ include alkyl groups such as methyl, ethyl, propyl, isopropyl, butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, and icosyl; cycloalkyl groups such as cyclopentyl, cyclohexyl and cycloheptyl; alkenyl groups such as vinyl, allyl, propenyl, isopropenyl, butenyl, pentenyl and hexenyl; aryl groups such as phenyl, tolyl, xylyl, α-naphthyl, β-naphthyl, and biphenylyl; and aralkyl groups such as benzyl, 2-phenylethyl, 3-phenylpropyl, 2-methyl-2-phenylethyl and methylbenzyl. Examples of the substituted monovalent hydrocarbon group R¹ include the foregoing unsubstituted monovalent hydrocarbon groups in which some or all of the hydrogen atoms are substituted by halogen atoms such as F, Cl or Br, cyano or the like. Exemplary such groups include 3-chloropropyl, 3,3,3-trifluoropropyl, and 2-cyanoethyl. Of these unsubstituted or substituted monovalent hydrocarbon groups, R¹ is preferably methyl, ethyl and phenyl, with methyl and phenyl being more preferred for availability, productivity and cost. A plurality of R¹ may be the same or different.

The organopolysiloxane having formula (1) as component (A) preferably has a viscosity at 23°C of 20 to 1,000,000 mPa·s, more preferably 50 to 500,000 mPa·s, even more preferably 100 to 100,000 mPa s, most preferably 500 to 80,000 mPa s. As long as the viscosity at 23°C of the organopolysiloxane is at least 20 mPa·s, preferably a coating film having satisfactory physical and mechanical properties is readily obtained. As long as the viscosity is up to 1,000,000 mPa·s, preferably the composition does not reach too high a viscosity and is good to work with on use. As used herein, the viscosity is as measured by a rotational viscometer unless otherwise stated (the same holds true, hereinafter). Exemplary rotational viscometers include those of BL, BH, BS and cone plate types.

In formula (1), the value of n is an integer of at least 10 and indicates the number of difunctional diorganosiloxane ((R¹)₂SiO_{2/2}) units per molecule or degree of polymerization. In the embodiment wherein the organopolysiloxane as component (A) has a viscosity in the preferred range, n in formula (1), indicative of the number of difunctional diorganosiloxane ((R¹)₂SiO_{2/2}) units or degree of polymerization, is an integer of 10 to 2,000, preferably 30 to 1,500, more preferably 50 to 1,200, even more preferably 100 to 1,000. As used herein, the degree of polymerization or molecular weight is a number average degree of polymerization or number average molecular weight as measured by gel permeation chromatography (GPC) versus polystyrene standards using toluene or the like as a developing solvent.

The organopolysiloxane having formula (2) is a linear organopolysiloxane which is capped at both ends of the molecular chain with a hydrolyzable silyl group such as alkoxysilyl group.

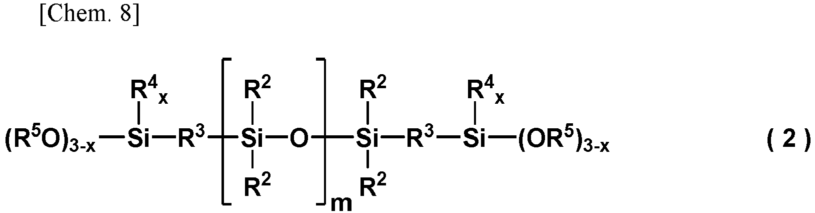

In formula (2), R² is independently a C₁-C₂₀ unsubstituted or substituted monovalent hydrocarbon group, R³ is oxygen or a C₁-C₄ alkylene group, R⁴ is independently a C₁-C₂₀ unsubstituted or substituted monovalent hydrocarbon group free of aliphatic unsaturation, R⁵ is independently a C₁-C₄ alkyl, alkoxyalkyl, alkenyl or acyl group, x is an integer of 0 to 2, and m is an integer of at least 10.

In formula (2), R² is independently a unsubstituted or substituted monovalent hydrocarbon group of 1 to 20 carbon atoms, preferably 1 to 10 carbon atoms, more preferably 1 to 6 carbon atoms, even more preferably 1 to 3 carbon atoms. Examples thereof include straight alkyl, branched alkyl, cyclic alkyl, alkenyl, aryl, aralkyl and halogenated alkyl groups. Examples of the straight alkyl group include methyl, ethyl, propyl, hexyl, octyl, nonyl, decyl, undecyl, dodecyl, tridecyl, tetradecyl, pentadecyl, hexadecyl, heptadecyl, octadecyl, nonadecyl, and icosyl. Examples of the branched alkyl group include isopropyl, isobutyl, tert-butyl and 2-ethylhexyl. Examples of the cyclic alkyl group include cyclopentyl, cyclohexyl and cycloheptyl. Examples of the alkenyl group include vinyl, allyl, propenyl, isopropenyl, butenyl, pentenyl and hexenyl. Examples of the aryl group include phenyl, tolyl, xylyl, α-naphthyl, β-naphthyl, and biphenylyl. Examples of the aralkyl group include benzyl, 2-phenylethyl, 3-phenylpropyl, 2-methyl-2-phenylethyl and methylbenzyl. Examples of the halogenated alkyl groups include 3-chloropropyl, 3,3,3-trifluoropropyl, 2-(nonafluorobutyl)ethyl and 2-(heptadecafluorooctyl)ethyl. R² is preferably methyl or phenyl.

In formula (2), R³ is oxygen or a C₁-C₄ alkylene group. Examples of the C₁-C₄ alkylene group R³ include methylene, ethylene, propylene and butylene. R³ is preferably oxygen or ethylene.

R⁴ is independently an unsubstituted or substituted monovalent hydrocarbon group of 1 to 20 carbon atoms, preferably 1 to 10 carbon atoms, more preferably 1 to 6 carbon atoms, even more preferably 1 to 3 carbon atoms, free of aliphatic unsaturation. Examples of the group R⁴ include alkyl groups such as methyl, ethyl, propyl, isopropyl, butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, and icosyl; cycloalkyl groups such as cyclopentyl, cyclohexyl and cycloheptyl; aryl groups such as phenyl, tolyl, xylyl, α-naphthyl, β-naphthyl, and biphenylyl; aralkyl groups such as benzyl, 2-phenylethyl, 3-phenylpropyl, 2-methyl-2-phenylethyl and methylbenzyl; and substituted forms of the foregoing in which some or all of the carbon-bonded hydrogen atoms are substituted by halogen atoms such as fluorine, chlorine and bromine, cyano or the like, such as 3-chloropropyl, 3,3,3-trifluoropropyl, and 2-cyanoethyl. R⁴ is preferably methyl, ethyl or phenyl.

In formula (2), R⁵ is independently a C₁-C₄ alkyl, alkoxyalkyl, alkenyl or acyl group. Examples of the alkyl group R⁵ include exemplary C₁-C₄ alkyl groups as exemplified above for R². Examples of the alkoxyalkyl group R⁵ include those of 2 to 4 carbon atoms such as methoxyethyl and methoxypropyl. Examples of the alkenyl group R⁵ include exemplary C₂-C₄ alkenyl groups as exemplified above for R². Examples of the acyl group R⁵ include those of 1 to 4 carbon atoms, such as acetyl and propionyl. R⁵ is preferably an alkyl group, most preferably methyl or ethyl.

In formula (2), x is an integer of 0 to 2, i.e., 0, 1 or 2, preferably 0 or 1, more preferably 0. It is noted that the number of silicon-bonded organoxy groups: OR⁵ such as alkoxy groups, which are hydrolyzable groups, is 2 to 6, preferably 4 to 6, more preferably 4 or 6 per molecule.

The organopolysiloxane having formula (2) as component (A) preferably has a viscosity at 23°C of 20 to 1,000,000 mPa·s, more preferably 50 to 500,000 mPa·s, even more preferably 100 to 200,000 mPa s, most preferably 500 to 100,000 mPa s. As long as the viscosity at 23°C of the organopolysiloxane is at least 20 mPa·s, preferably a coating film having satisfactory physical and mechanical properties is readily obtained. As long as the viscosity is up to 1,000,000 mPa·s, preferably the composition does not reach too high a viscosity and is good to work with on use.

In formula (2), the value of m is an integer of at least 10 and indicates the number of difunctional diorganosiloxane ((R²)₂SiO_{2/2}) units per molecule or degree of polymerization. In the embodiment wherein the organopolysiloxane as component (A) has a viscosity in the preferred range, m in formula (2), indicative of the number of difunctional diorganosiloxane ((R²)₂SiO_{2/2}) units or degree of polymerization, is an integer of 10 to 2,000, preferably 50 to 1,800, more preferably 100 to 1,700, even more preferably 200 to 1,600.

The organopolysiloxane as component (A) may be used alone or in admixture of two or more.

### - Component (B): Hydrolyzable organosilane compound and/or partial hydrolytic condensate thereof -

Component (B) serves as a curing or crosslinking agent in the two-pack type RT fast-curable organopolysiloxane composition. Component (B) is a hydrolyzable organosilane compound having two alkoxysilyl-vinylene or alkoxysilyl-ethenylene groups on a common silicon atom, represented by the general formula (3), and/or a partial hydrolytic condensate thereof.

As used herein, the term "partial hydrolytic condensate" refers to an organosiloxane oligomer obtained from partial hydrolytic condensation of the hydrolyzable organosilane and having at least three residual hydrolyzable groups per molecule. An organosiloxane oligomer having two residual hydrolyzable groups may be used in combination.

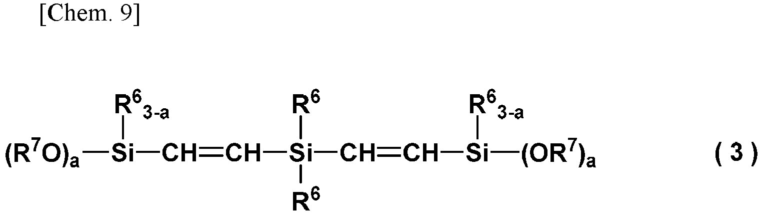

In formula (3), R⁶ is independently a C₁-C₂₀ unsubstituted or substituted monovalent hydrocarbon group, R⁷ is independently a C₁-C₂₀ unsubstituted or substituted alkyl group or C₃-C₂₀ unsubstituted or substituted cycloalkyl group, and a is an integer of 1 to 3 independently for each silicon atom.

In formula (3), the unsubstituted or substituted monovalent hydrocarbon group R⁶ is of 1 to 20 carbon atoms, preferably 1 to 10 carbon atoms, more preferably 1 to 8 carbon atoms. Examples of the unsubstituted monovalent hydrocarbon group R⁶ include alkyl groups such as methyl, ethyl, propyl, isopropyl, butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, and icosyl; cycloalkyl groups such as cyclopentyl, cyclohexyl and cycloheptyl; alkenyl groups such as vinyl, allyl, propenyl, isopropenyl, butenyl, pentenyl and hexenyl; aryl groups such as phenyl, tolyl, xylyl, α-naphthyl, β-naphthyl, and biphenylyl; and aralkyl groups such as benzyl, 2-phenylethyl, 3-phenylpropyl, 2-methyl-2-phenylethyl and methylbenzyl. Examples of the substituted monovalent hydrocarbon group R⁶ include the foregoing unsubstituted monovalent hydrocarbon groups in which some or all of the hydrogen atoms are substituted by halogen atoms such as F, Cl or Br, cyano or the like, such as 3-chloropropyl, 3,3,3-trifluoropropyl, and 2-cyanoethyl. Of these unsubstituted or substituted monovalent hydrocarbon groups, R⁶ is preferably methyl, ethyl and phenyl, with methyl and phenyl being more preferred for availability, productivity and cost. A plurality of R⁶ may be the same or different.

In formula (3), R⁷ is a C₁-C₂₀ unsubstituted or substituted alkyl group or C₃-C₂₀ unsubstituted or substituted cycloalkyl group. The unsubstituted or substituted alkyl group is of 1 to 20 carbon atoms, preferably 1 to 6 carbon atoms, more preferably 1 to 4 carbon atoms. Examples of the unsubstituted alkyl group include methyl, ethyl, propyl, isopropyl, butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, and icosyl. The unsubstituted or substituted cycloalkyl group is of 3 to 20 carbon atoms, preferably 4 to 8 carbon atoms, more preferably 5 or 6 carbon atoms. Examples of the unsubstituted cycloalkyl group include cyclopentyl, cyclohexyl and cycloheptyl. In these unsubstituted alkyl and cycloalkyl groups, some or all of the hydrogen atoms may be substituted by halogen atoms such as F, Cl and Br, cyano or the like. Examples of the substituted alkyl and cycloalkyl groups include 3-chloropropyl, 3,3,3-trifluoropropyl, and 2-cyanoethyl. Of these, R⁷ is preferably methyl or ethyl in view of hydrolysis, most preferably methyl.

In formula (3), "a" indicative of the number of alkoxy groups each bonded to a silicon atom in the alkoxysilyl-vinylene group, is an integer of 1 to 3 for each silicon atom, and "a" is preferably 2 or 3 in view of cure. In particular, the compound in which each of two alkoxysilyl-vinylene groups per molecule has three alkoxy groups such as methoxy, that is, has 6 alkoxy groups in total per molecule is effective as the curing or crosslinking agent in the two-pack type RT fast-curable organopolysiloxane composition because the compound contains two trifunctional alkoxysilane sites per molecule.

Examples of the hydrolyzable organosilane compound as component (B) include hydrolyzable organosilane compounds having two trialkoxysilyl-vinylene groups such as trimethoxysilyl-vinylene groups or triethoxysilyl-vinylene groups on a common silicon atom per molecule, and hydrolyzable organosilane compounds having two (organo)dialkoxysilyl-vinylene groups such as (organo)dimethoxysilyl-vinylene groups or (organo)diethoxysilyl-vinylene groups on a common silicon atom per molecule, such as bis(trimethoxysilylethenyl)dimethylsilane, bis(trimethoxysilylethenyl)diethylsilane, bis(trimethoxysilylethenyl)methylethylsilane, bis(trimethoxysilylethenyl)methylphenylsilane, bis(triethoxysilylethenyl)dimethylsilane, bis(triethoxysilylethenyl)diethylsilane, bis(triethoxysilylethenyl)methylethylsilane, bis(triethoxysilylethenyl)methylphenylsilane, bis(methyldimethoxysilylethenyl)dimethylsilane, bis(methyldimethoxysilylethenyl)diethylsilane, bis(methyldimethoxysilylethenyl)methylethylsilane, bis(methyldimethoxysilylethenyl)methylphenylsilane, bis(ethyldimethoxysilylethenyl)dimethylsilane, bis(ethyldimethoxysilylethenyl)diethylsilane, bis(ethyldimethoxysilylethenyl)methylethylsilane, bis(ethyldimethoxysilylethenyl)methylphenylsilane, bis(methyldiethoxysilylethenyl)dimethylsilane, bis(methyldiethoxysilylethenyl)diethylsilane, bis(methyldiethoxysilylethenyl)methylethylsilane, bis(methyldiethoxysilylethenyl)methylphenylsilane, and
partial hydrolytic condensates thereof.

General-purpose reactants, chlorosilane and hydrosilanes (e.g., diorganodichlorosilanes and monohydroalkoxysilanes) may be used as the starting reactants for component (B).

Specifically, the hydrolyzable organosilane compound having two hydrolyzable silyl-vinylene groups (or hydrolyzable silyl-ethenylene groups) such as alkoxysilyl-vinylene groups (or alkoxysilyl-ethenylene groups) on a common silicon atom may be readily prepared, for example, by effecting hydrosilylation addition reaction of 1 mole of an organosilane having two ethynyl groups on a common silicon atom, which is derived from a diorganodichlorosilane which is an industrial general-purpose reactant, with 2 moles of a hydrolyzable group-containing hydrosilane such as monohydroalkoxysilane. This reaction is represented, for example, by the following scheme (3-1). 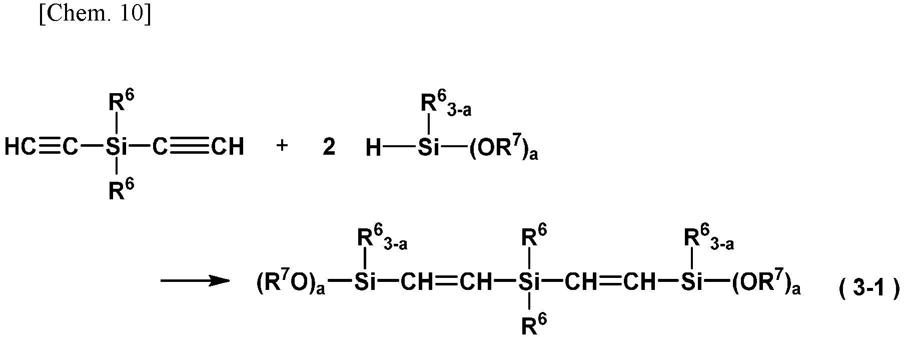 Herein R⁶, R⁷, and a are as defined in formula (3).

A hydrosilylation or addition reaction catalyst is used for adding a hydrolyzable group-containing hydrosilane such as monohydroalkoxysilane. Suitable catalysts include platinum group metal based catalysts such as platinum, palladium, rhodium, and ruthenium based catalysts, with the platinum based catalysts being preferred. Exemplary platinum based catalysts include platinum black, solid platinum on supports such as alumina and silica, chloroplatinic acid, alcohol-modified chloroplatinic acid, complexes of chloroplatinic acid with olefins, and complexes of chloroplatinic acid with vinylsiloxanes. The amount of platinum used may be a so-called catalytic amount and is, for example, 0.1 to 1,000 ppm, especially 0.5 to 100 ppm of platinum group metal based on the hydrolyzable group-containing hydrosilane such as monohydroalkoxysilane.

The reaction is performed typically at a temperature of 50 to 120°C, especially 60 to 100°C for 0.5 to 12 hours, especially 1 to 6 hours. Although the reaction may be performed without using a solvent, a suitable solvent such as toluene or xylene may be used as long as it does not adversely affect the hydrosilylation or addition reaction.

The hydrolyzable organosilane compound and/or partial hydrolytic condensate thereof may be used alone or in admixture as component (B).

The amount of component (B) used is 0.1 to 30 parts by weight, preferably 0.5 to 25 parts by weight per 100 parts by weight of total component (A) in the first and second packs. If the amount of component (B) is too small, crosslinking does not take place to a full extent during curing of the composition. If the amount of component (B) is too large, there may arise the problems that the resulting cured product (silicone rubber cured product) has degraded mechanical properties (rubber physical properties) and is economically disadvantageous.

### - Component (C) -

Component (C) is a curing catalyst which is used to promote the hydrolytic condensation reaction of the two-pack type RT fast-curable organopolysiloxane composition with airborne moisture and generally referred to as curing catalyst. Any of well-known curing catalysts which are generally used in RT-curable silicone resin compositions adapted to cure in the presence of moisture may be used.

Of the curing catalysts as component (C), non-metal-base organic catalysts are not particularly limited, and any catalysts which are well known as the cure promoter for organopolysiloxane compositions of condensation cure type may be used. Examples include phosphazene-containing compounds such as N,N,N',N',N",N"-hexamethyl-N‴-(trimethylsilylmethyl)phospholimidic triamide; amine compounds and salts thereof such as hexylamine and dodecylamine phosphate; quaternary ammonium salts such as benzyltriethylammonium acetate; dialkylhydroxylamines such as dimethylhydroxylamine and diethylhydroxylamine; guanidyl group-containing silanes and siloxanes such as N,N,N',N' -tetramethylguanidylpropyltrimethoxysilane, N,N,N',N'-tetramethylguanidylpropylmethyldimethoxysilane, and N, N,N',N'-tetramethylguanidylpropyltris(trimethylsiloxy)silane. The non-metal-base organic catalysts may be used alone or in admixture.

Of the curing catalysts as component (C), metal-base catalysts are not particularly limited, and any catalysts which are well known as the curing catalyst for organopolysiloxane compositions of condensation cure type may be used. Examples include alkyl tin ester compounds such as dibutyltin diacetate, dibutyltin dilaurate, dibutyltin dioctoate, dimethyltin dineodecanoate, dioctyltin dineodecanoate, and di-n-butyldimethoxytin; titanates or titanium chelate compounds such as tetraisopropoxytitanium, tetra-n-butoxytitanium, tetrakis(2-ethylhexoxy)titanium, dipropoxybis(acetylacetonato)titanium, and titanium isopropoxyoctylene glycol; zinc naphthenate, zinc stearate, zinc 2-ethyloctoate; aluminum alcoholate compounds such as aluminum isopropylate and aluminum secondary butyrate; aluminum chelates such as aluminum alkylacetate/diisopropylate, aluminum bisethylacetoacetate/monoacetylacetonate; organometallic compounds such as bismuth(III) neodecanoate, bismuth(III) 2-ethylhexanoate, bismuth(III) citrate, bismuth octylate, iron 2-ethylhexoate, cobalt 2-ethylhexoate, manganese 2-ethylhexoate, and cobalt naphthenate; and alkali metal salts of lower fatty acids such as potassium acetate, sodium acetate and lithium oxalate. While the metal-base catalysts are not limited thereto, they may be used alone or in admixture.

The amount of component (C) used is 0.001 to 10 parts by weight, preferably 0.005 to 8 parts by weight, more preferably 0.01 to 5 parts by weight per 100 parts by weight of total component (A) in the first and second packs. If the amount of component (C) is less than 0.001 part by weight, no satisfactory cure is obtainable, leading to the trouble of a delayed curing rate. If the amount of component (C) exceeds 10 parts by weight, the composition cures too fast, with the risks that the tolerance range of working time of the composition after coating is shortened and the resulting rubber has degraded mechanical properties.

### - Component (D): Filler -

Component (D) is a filler which may be an inorganic filler and/or organic resin filler. It is an optional component which is blended when necessary. It is used to impart sufficient mechanical strength to a cured product of the two-pack type RT fast-curable organopolysiloxane composition. Any of well-known fillers may be used. Examples include inorganic fillers including reinforcing silica fillers such as wet silicas, e.g., finely divided silica, fumed silica and precipitated silica, and silicas which are treated on their surface with organosilicon compounds to be hydrophobic; reinforcements such as glass beads, glass balloons, transparent resin beads, silica aerogel, diatomaceous silica, iron oxide, zinc oxide, titanium oxide, metal oxides, e.g., fumed metal oxides, quartz flour (crystalline silica powder), carbon black, talc, zeolite and bentonite; asbestos, glass fibers, carbon fibers, metal carbonates (e.g., calcium carbonate, magnesium carbonate, and zinc carbonate), asbestos, glass wool, finely divided mica, fused silica powder; and synthetic resin powders such as polystyrene, polyvinyl chloride, and polypropylene. Of the foregoing fillers, inorganic fillers such as silica, calcium carbonate and zeolite are preferred as well as fumed silica which is hydrophobically treated on its surface and calcium carbonate.

The amount of component (D) used is preferably 0 to 1,000 parts by weight in the first and second packs (at least either one of the first and second packs contains at least 0.1 part by weight) per 100 parts by weight of total component (A) in the first and second packs, more preferably 0 to 500 parts by weight in the first and second packs (at least either one of the first and second packs contains at least 0.1 part by weight) per 100 parts by weight of total component (A) in the first and second packs. If component (D) is used in an amount in excess of 1,000 parts by weight, the composition becomes awkward to work due to a viscosity buildup and difficult to acquire rubber elasticity due to a decline of rubber strength after curing. When used, the total amount of component (D) used in the composition is preferably 0.1 to 2,000 parts by weight, more preferably 0.1 to 1,000 parts by weight per 100 parts by weight of total component (A) in the first and second packs.

### - Component (E): Adhesion promoter -

Component (E) is an adhesion promoter. It is an optional component which is blended when necessary. It is used to impart sufficient adhesion to a cured product of the two-pack type RT fast-curable organopolysiloxane composition. Any of well-known adhesion promoters may be used. Examples include silane coupling agents such as functional group-containing hydrolyzable silanes, specifically vinyl silane coupling agents, (meth)acrylic silane coupling agents, epoxysilane coupling agents, aminosilane coupling agents (exclusive of guanidyl group-containing hydrolyzable organosilane compounds), mercaptosilane coupling agents, and isocyanatosilane coupling agents. Illustrative examples include vinyl tris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, N-β-(aminoethyl)γ-aminopropyltrimethoxysilane, γ-aminopropyltriethoxysilane, 3-2-(aminoethylamino)propyltrimethoxysilane, γ-mercaptopropyltrimethoxysilane, and 3-isocyanatopropyltriethoxysilane.

Of these, preference is given to aminosilanes such as γ-aminopropyltrimethoxysilane and N-β-(aminoethyl)γ-aminopropyltrimethoxysilane, epoxysilanes such as γ-glycidoxypropyltrimethoxysilane and β-(3,4-epoxycyclohexyl)ethyltrimethoxysilane, and isocyanatosilanes such as 3-isocyanatopropyltriethoxysilane.

When used, the amount of component (E) used in the first and second packs is preferably 0 to 30 parts by weight (at least either one of the first and second packs contains at least 0.001 part by weight), more preferably 0.1 to 20 parts by weight per 100 parts by weight of total component (A) in the first and second packs. That is, the total amount of component (E) used in the composition is preferably 0.001 to 60 parts by weight, more preferably 0.1 to 40 parts by weight per 100 parts by weight of total component (A) in the first and second packs. When the composition free of the adhesion promoter is adhesive, depending on a particular filler and adherend, the adhesion promoter need not be used.

### - Component (F): Organopolysiloxane -

In addition to the foregoing components (A) to (E), the two-pack type RT fast-curable organopolysiloxane composition may comprise (F) a linear diorganopolysiloxane (so-called non-functional silicone oil) having the general formula (4) as an optional component which is blended if necessary.

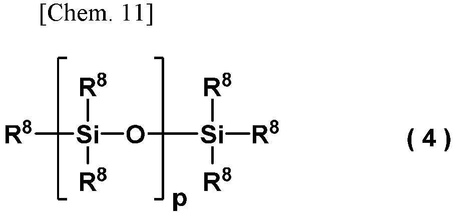

In formula (4), R⁸ is independently a C₁-C₂₀ unsubstituted or substituted monovalent hydrocarbon group free of aliphatic unsaturation and p is an integer of 1 to 2,000.

In formula (4), the aliphatic unsaturation-free, unsubstituted or substituted monovalent hydrocarbon group R⁸ is of 1 to 20 carbon atoms, preferably 1 to 10 carbon atoms, more preferably 1 to 8 carbon atoms. Examples of the unsubstituted monovalent hydrocarbon group R⁸ include alkyl groups such as methyl, ethyl, propyl, isopropyl, butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, and icosyl; cycloalkyl groups such as cyclopentyl, cyclohexyl and cycloheptyl; aryl groups such as phenyl, tolyl, xylyl, α-naphthyl, β-naphthyl, and biphenylyl; and aralkyl groups such as benzyl, 2-phenylethyl, 3-phenylpropyl, 2-methyl-2-phenylethyl and methylbenzyl. Examples of the substituted monovalent hydrocarbon group include the foregoing unsubstituted monovalent hydrocarbon groups in which some or all of the hydrogen atoms are substituted by halogen atoms such as F, Cl or Br, cyano or the like. Exemplary such groups include 3-chloropropyl, 3,3,3-trifluoropropyl, and 2-cyanoethyl. Of these hydrocarbon groups, R⁸ is preferably methyl, ethyl and phenyl, with methyl and phenyl being more preferred for availability, productivity and cost. Most preferably, all R⁸ are methyl. A dimethylpolysiloxane capped at both ends of the molecular chain with a trimethylsiloxy group is preferred.

In formula (4), p indicative of the degree of polymerization of component (F) is an integer of 1 to 2,000, preferably 2 to 2,000, more preferably 20 to 2,000. When the value of p falls within the range, the diorganopolysiloxane as component (F) has a viscosity at 23°C of 1.5 to 1,000,000 mPa·s, preferably 30 to 100,000 mPa·s.

When used, the amount of component (F) used is preferably 0 to 100 parts by weight in the first and second packs (with the proviso that at least either one of the first and second packs contains at least 0.01 part by weight) per 100 parts by weight of total component (A) in the first and second packs, more preferably 10 to 80 parts by weight. That is, the total amount of component (F) used in the composition is preferably 0.01 to 200 parts by weight, more preferably 10 to 160 parts by weight per 100 parts by weight of total component (A) in the first and second packs. When the amount of component (F) falls within the range, preferably component (F) does not adversely affect the mechanical properties and flame retardance of a cured product (silicone rubber) of the two-pack type RT fast-curable organopolysiloxane composition. Additionally, the uncured composition can be adjusted to a viscosity which is easy to handle upon application.

### - Other components -

In a preferred embodiment, the two-pack type RT fast-curable organopolysiloxane composition contains components (A), (B) and (C) as essential components and components (D), (E) and (F) if necessary. Besides, any well-known additives may be blended, for example, pigments, dyes, anti-aging agents, antioxidants, antistatic agents, and flame retardants (e.g., antimony oxide and chlorinated paraffins). Further, thixotropic agents (e.g., polyether), mildew-proof agents and antibacterial agents may be blended.

Also, an organic solvent may be used in the two-pack type RT fast-curable organopolysiloxane composition if necessary. Suitable organic solvents include aliphatic hydrocarbon compounds such as n-hexane, n-heptane, isooctane and isododecane; aromatic hydrocarbon compounds such as toluene and xylene; chainlike siloxanes such as hexamethyldisiloxane, octamethyltrisiloxane, decamethyltetrasiloxane, dodecamethylpentasiloxane, and 2-(trimethylsiloxy)-1,1,1,2,3,3,3-heptamethyltrisiloxane; and cyclic siloxanes such as octamethylcyclopentasiloxane and decamethylcyclopentasiloxane. The amount of the organic solvent may be adjusted as appropriate insofar as the benefits of the invention are not impaired.

### [Preparation of RT fast-curable organopolysiloxane composition]

The two-pack type RT fast-curable organopolysiloxane composition of the invention consists of a first pack containing part of component (A) and the entirety of component (B), but not component (C), and a second pack containing the remainder of component (A) and the entirety of component (C), but not component (B).

The first pack may be prepared by mixing part of component (A), the entirety of component (B), and optionally, part or the entirety of components (D), (E), (F) and other components in a standard way. Also, the second pack may be prepared by mixing the remainder of component (A), the entirety of component (C), and optionally, the remainder or the entirety of components (D), (E), (F) and other components in a standard way.

It is noted that component (A) is blended in the first and second packs, preferably in such a ratio that the amounts of component (A) in the first and second packs are from 100:10 to 100:100, especially from 100:25 to 100:100, in view of working efficiency in the step of mixing the first and second packs and the uniformity or miscibility of the resulting composition. The optional components (D), (E), (F) and other components may be blended in either one or both of the first and second packs. Preferably components (D), (E), and (F) are blended in the first pack and components (D) and (F) are blended in the second pack.

For the storage of the two-pack type RT fast-curable organopolysiloxane composition, the first and second packs prepared as above may be stored in a moisture-free atmosphere.

### [Curing of RT fast-curable organopolysiloxane composition]

After the first and second packs are mixed in a proper ratio, specifically in a weight ratio of from 1:1 to 10: 1, more specifically from 1: 1 to 4:1, the two-pack type RT fast-curable organopolysiloxane composition generally cures at RT in 10 minutes to 5 days.

By virtue of fast curability, the two-pack type RT fast-curable organopolysiloxane composition cures in a short time of 10 minutes to 3 days in contrast to the standard curing time of 3 days to 5 days.

By virtue of depth curability, the two-pack type RT fast-curable organopolysiloxane composition cures to a deep section in a short time of 30 minutes in contrast to the standard time of 2 hours.

Also, the two-pack type RT fast-curable organopolysiloxane composition may be cured on the surface of a substrate to form a tightly bonded organopolysiloxane cured product layer (silicone rubber layer) on the substrate. A variety of substrates are applicable herein, which are made of metals (e.g., aluminum, iron, stainless steel, copper), organic resins (e.g., polycarbonate resins, acrylic resins, glass-reinforced epoxy resins), and glass, but not limited thereto.

### [Application of RT fast-curable organopolysiloxane composition]

The two-pack type RT fast-curable organopolysiloxane composition is improved in fast cure and deep cure at RT in air and working efficiency. Another advantage is shelf stability. Even after storage for a long period of time, for example, 6 months, the two-pack type RT fast-curable organopolysiloxane composition quickly cures through the steps of mixing the first and second packs and exposing to air. The cured product exhibits excellent physical properties. That is, the two-pack type RT fast-curable organopolysiloxane composition cures into a cured product having excellent heat resistance, water resistance, and moisture resistance. Accordingly, the two-pack type RT fast-curable organopolysiloxane composition is useful as a sealing, coating or adhesive agent to a place where heat resistance, water resistance, and moisture resistance are necessary. In particular, the composition is advantageously used in the building application and as the adhesive agent for electric/electronic parts requiring moisture resistance and water resistance. Alternatively, when the two-pack type RT fast-curable organopolysiloxane composition is cured, a molded article comprising the cured composition having heat resistance, water resistance, and moisture resistance may be formed.

The method of using the two-pack type RT fast-curable organopolysiloxane composition as a sealing, coating or adhesive agent may be in accord with the prior art well-known method.

### EXAMPLES

Examples and Comparative Examples are given below for further illustrating the invention although the invention is not limited thereto. The viscosity is as measured by a rotational viscometer.

### [Example 1]

### Preparation of first pack (a)

A first pack (a) was prepared by mixing the following under reduced pressure until uniform; 75 parts by weight of dimethylpolysiloxane which is capped at both ends of the molecular chain with a silanol group (silicon-bonded hydroxy group) and has a viscosity of 5,000 mPa·s at 23°C, 15 parts by weight of dimethylpolysiloxane which is capped at both ends of the molecular chain with a silanol group and has a viscosity of 700 mPa·s at 23°C, 8 parts by weight of dry silica (fumed silica) having a BET surface area of 130 m²/g, 3.5 parts by weight of bis(trimethoxysilylethenyl)dimethylsilane, 2 parts by weight of γ-aminopropyltriethoxysilane, and 2 parts by weight of N-β-(aminoethyl)γ-aminopropyltrimethoxysilane.

### Preparation of second pack (b)

A second pack (b) was prepared by mixing the following under reduced pressure until uniform; 75 parts by weight of dimethylpolysiloxane which is capped at both ends of the molecular chain with a silanol group and has a viscosity of 5,000 mPa·s at 23°C, 15 parts by weight of dimethylpolysiloxane which is capped at both ends of the molecular chain with a silanol group and has a viscosity of 700 mPa·s at 23°C, 8 parts by weight of dry silica (fumed silica) having a BET surface area of 130 m²/g, and 0.1 part by weight of dimethyltin dineodecanoate.

Composition 1 was prepared by mixing first and second packs (a) and (b) in a mix ratio (weight ratio) of 1:1 until uniform. Composition 1 was coated on a substrate to a thickness of 2.5 mm. The coating was then allowed to stand under conditions of 23°C and 50% RH for 1 day or 3 days for curing. Cured products 1-1 and 1-2 were obtained.

### [Example 2]

Composition 2 was prepared as in Example 1 except that 4.8 parts by weight of bis(methyldimethoxysilylethenyl)dimethylsilane was used instead of bis(trimethoxysilylethenyl)dimethylsilane in first pack (a). Cured products 2-1 and 2-2 were similarly obtained.

### [Example 3]

Compositions 3-1 and 3-2 were prepared as in Example 1 except that 1 part by weight of N,N,N',N'-tetramethylguanidylpropyltrimethoxysilane was used instead of dimethyltin dineodecanoate in second pack (b). Cured product 3 was similarly obtained.

### [Comparative Example 1]

Compositions 4-1 and 4-2 were prepared as in Example 1 except that 2.7 parts by weight of methyltrimethoxysilane was used instead of bis(trimethoxysilylethenyl)dimethylsilane in first pack (a). Cured product 4 was similarly obtained.

### [Comparative Example 2]

Composition 5 was prepared as in Example 1 except that 2.9 parts by weight of vinyltrimethoxysilane was used instead of bis(trimethoxysilylethenyl)dimethylsilane in first pack (a). Cured products 5-1 and 5-2 were similarly obtained.

### [Test methods]

Each of the compositions prepared in Examples 1 to 3 and Comparative Examples 1 and 2 was evaluated for curability, rubber physical properties, and adhesion by the following methods.

### [Curability]

Each of the compositions prepared in Examples 1 to 3 and Comparative Examples 1 and 2 was measured for a tack-free time according to the method prescribed in JIS A-5758.

Also, a glass dish having an inner diameter of 10 mm was charged with each of the compositions prepared in Examples 1 to 3 and Comparative Examples 1 and 2, which was allowed to stand in air at 23°C and 50% RH for 20 minutes. The thickness of a cured portion from the surface in contact with air was measured to evaluate deep cure.

### [Rubber physical properties]

Each of the compositions of Examples 1 to 3 and Comparative Examples 1 and 2, immediately after preparation, was extruded into a sheet of 2 mm thick, which was exposed to air at 23°C and 50% RH. The sheet was allowed to stand in the same atmosphere for 1 day or 3 days. The cured products were measured for rubber physical properties (hardness, elongation at break, tensile strength) according to JIS K-6249. Notably, hardness was measured by Durometer Type A of JIS K-6249.

### [Adhesion]

A pair of aluminum or glass substrates of 25 mm wide and 100 mm long were bonded with each of the compositions prepared in Examples 1 to 3 and Comparative Examples 1 and 2, completing a shearing bond test sample having a bonding area of 2.5 mm² and a bonding thickness of 1 mm. The samples were aged at 23°C and 50% RH for 1 day or 3 days, after which they were measured for shear bond strength relative to aluminum or glass according to the method of JIS K-6249.

Table 1 shows the test results of Examples 1 to 3. Table 2 shows the test results of Comparative Examples 1 and 2.

**[Table 1]**

| Test results | | Example 1 | | Example 2 | | Example 3 | |
|---|---|---|---|---|---|---|---|
| Composition | | 1 | | 2 | | 3 | |
| Curability | Tack-free time (min) | 5 | | 8 | | 4 | |
| | Deep cure (mm) | 0.75 | | 0.65 | | 0.85 | |
| Curing time (day) | | 1 | 3 | 1 | 3 | 1 | 3 |
| Cured product | | 1-1 | 1-2 | 2-1 | 2-2 | 3-1 | 3-2 |
| Rubber physical properties | Type A hardness | 29 | 31 | 21 | 23 | 27 | 29 |
| | Elongation at break (%) | 190 | 200 | 250 | 270 | 210 | 220 |
| | Tensile strength (MPa) | 1.1 | 1.4 | 1.0 | 1.3 | 1.2 | 1.5 |
| Adhesion | Shear bond strength (Al/Al) | 0.24 | 0.26 | 0.22 | 0.24 | 0.26 | 0.28 |
| | Shear bond strength (glass/glass) | 0.39 | 0.41 | 0.35 | 0.38 | 0.42 | 0.44 |

**[Table 2]**

| Test results | | Comparative Example 1 | | Comparative Example 2 | |
|---|---|---|---|---|---|
| Composition | | 4 | | 5 | |
| Curability | Tack-free time (min) | 60 | | 50 | |
| | Deep cure (mm) | undercure, unmeasurable | | undercure, unmeasurable | |
| Curing time (day) | | 1 | 3 | 1 | 3 |
| Cured product | | 4-1 | 4-2 | 5-1 | 5-2 |
| Rubber physical properties | Type A hardness | 6 | 19 | 5 | 17 |
| | Elongation at break (%) | 390 | 220 | 410 | 210 |
| | Tensile strength (MPa) | 0.3 | 0.4 | 0.4 | 0.5 |
| Adhesion | Shear bond strength (Al/Al) | undercure, unmeasurable | 0.13 | undercure, unmeasurable | 0.14 |
| | Shear bond strength (glass/glass) | undercure, unmeasurable | 0.15 | undercure, unmeasurable | 0.16 |

It is noted that the invention is not limited to the aforementioned embodiments. While the embodiments are merely exemplary, any embodiments having substantially the same construction as the technical concept set forth in the following claims and exerting equivalent functions and results are believed to be within the spirit and scope of the invention.

## Claims

1. A two-pack type room temperature fast-curable organopolysiloxane composition consisting of:
a first pack comprising
(A) 100 parts by weight of an organopolysiloxane having the general formula (1) or (2): 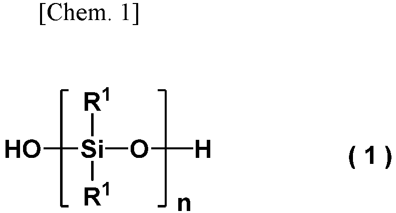 wherein R¹ is independently a C₁-C₂₀ unsubstituted or substituted monovalent hydrocarbon group and n is an integer of at least 10, 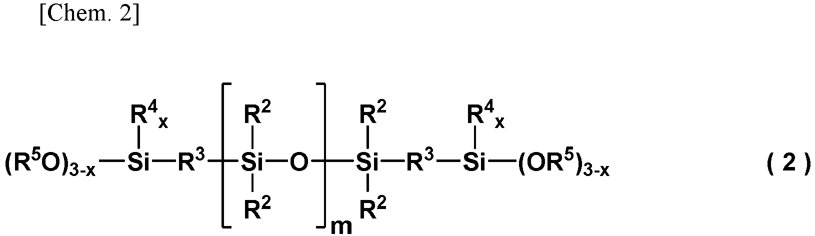 wherein R² is independently a C₁-C₂₀ unsubstituted or substituted monovalent hydrocarbon group, R³ is oxygen or a C₁-C₄ alkylene group, R⁴ is independently a C₁-C₂₀ unsubstituted or substituted monovalent hydrocarbon group free of aliphatic unsaturation, R⁵ is independently a C₁-C₄ alkyl, alkoxyalkyl, alkenyl or acyl group, x is an integer of 0 to 2, and m is an integer of at least 10, and
(B) a hydrolyzable organosilane compound having the general formula (3): 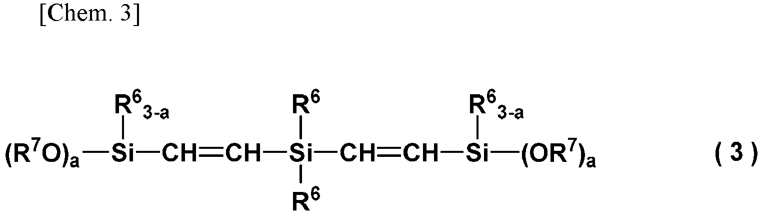 wherein R⁶ is independently a C₁-C₂₀ unsubstituted or substituted monovalent hydrocarbon group, R⁷ is independently a C₁-C₂₀ unsubstituted or substituted alkyl group or C₃-C₂₀ unsubstituted or substituted cycloalkyl group, and a is an integer of 1 to 3 independently for each silicon atom, and/or a partial hydrolytic condensate thereof, in an amount of 0.1 to 30 parts by weight per 100 parts by weight of total component (A) in the first and second packs, and
a second pack comprising
(A) 10 to 100 parts by weight of an organopolysiloxane having the general formula (1) or (2): 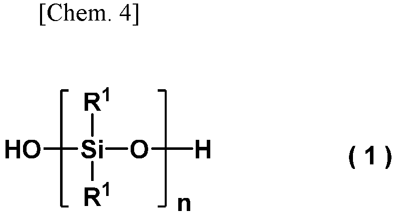 wherein R¹ is independently a C₁-C₂₀ unsubstituted or substituted monovalent hydrocarbon group and n is an integer of at least 10, 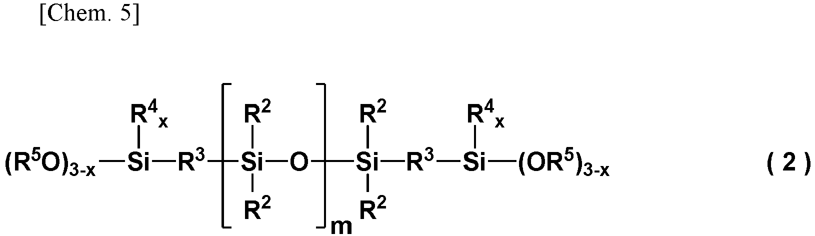 wherein R² is independently a C₁-C₂₀ unsubstituted or substituted monovalent hydrocarbon group, R³ is oxygen or a C₁-C₄ alkylene group, R⁴ is independently a C₁-C₂₀ unsubstituted or substituted monovalent hydrocarbon group free of aliphatic unsaturation, R⁵ is independently a C₁-C₄ alkyl, alkoxyalkyl, alkenyl or acyl group, x is an integer of 0 to 2, and m is an integer of at least 10, and
(C) a curing catalyst in an amount of 0.001 to 10 parts by weight per 100 parts by weight of total component (A) in the first and second packs.

2. The two-pack type room temperature fast-curable organopolysiloxane composition of claim 1, further comprising (D) a filler in each of the first and second packs in an amount of 0 to 1,000 parts by weight per 100 parts by weight of total component (A) in the first and second packs, with the proviso that at least one of the first and second packs contains at least 0.1 part by weight of the filler.

3. The two-pack type room temperature fast-curable organopolysiloxane composition of claim 1 or 2, further comprising (E) an adhesion promoter in each of the first and second packs in an amount of 0 to 30 parts by weight per 100 parts by weight of total component (A) in the first and second packs, with the proviso that at least one of the first and second packs contains at least 0.001 part by weight of the adhesion promoter.

4. The two-pack type room temperature fast-curable organopolysiloxane composition of any one of claims 1 to 3, further comprising (F) an organopolysiloxane having the general formula (4) in each of the first and second packs in an amount of 0 to 100 parts by weight per 100 parts by weight of total component (A) in the first and second packs, with the proviso that at least one of the first and second packs contains at least 0.01 part by weight of the organopolysiloxane having formula (4), 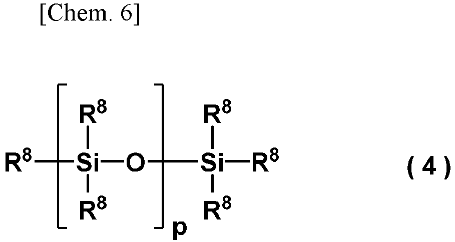 wherein R⁸ is independently a C₁-C₂₀ unsubstituted or substituted monovalent hydrocarbon group free of aliphatic unsaturation and p is an integer of 1 to 2,000.

5. The two-pack type room temperature fast-curable organopolysiloxane composition of any one of claims 1 to 4 wherein the first and second packs are in a weight ratio of from 1:1 to 10:1.

6. A sealing agent comprising the two-pack type room temperature fast-curable organopolysiloxane composition of any one of claims 1 to 5.

7. A coating agent comprising the two-pack type room temperature fast-curable organopolysiloxane composition of any one of claims 1 to 5.

8. An adhesive agent comprising the two-pack type room temperature fast-curable organopolysiloxane composition of any one of claims 1 to 5.

9. A cured product of the two-pack type room temperature fast-curable organopolysiloxane composition of any one of claims 1 to 5.

10. A molded article comprising the cured product of the two-pack type room temperature fast-curable organopolysiloxane composition of claim 9.
